# EUROPÄISCHE PATENTSCHRIFT

(11) **EP 0 862 107 B1**
(45) Veröffentlichungstag und Bekanntmachung des Hinweises auf die Patenterteilung: **07.04.2004**
(21) Anmeldenummer: 98100560.6
(22) Anmeldetag: 14.01.1998
(51) Int. Cl.: G06F 1/26, H04B 1/16, H03K 19/00

(54) **Verfahren und Schaltungsanordnung zur Steuerung von Betriebszuständen einer zweiten Einrichtung durch eine erste Einrichtung**
Method and circuit for controlling the operating state of a second device by means of a first device
Procédé et circuit pour commander l'état de fonctionnement d'un deuxième dispositif par un premier dispositif

(30) Priorität: 21.01.1997 DE 19701911
(43) Veröffentlichungstag der Anmeldung: 02.09.1998
(73) Patentinhaber: Infineon Technologies AG, 81669 München (DE)
(72) Erfinder: Hadjizada, Abdul-Karim, 40882 Ratingen (DE); Heinen, Stefan, 47802 Krefeld (DE); Matter, Udo, 40489 Düsseldorf (DE)
(74) Vertreter: Epping, Hermann, Fischer

(56) Entgegenhaltungen:
- EP-A- 0 544 368
- US-A- 4 501 975
- US-A- 4 906 870

## Beschreibung

Die Erfindung betrifft ein Verfahren zur Steuerung von Betriebszuständen einer zweiten Einrichtung von einer ersten Einrichtung aus, bei dem die Einrichtungen über Takt, Daten- und Freigabesignalleitungen miteinander verbunden sind, um die zweite Einrichtung ein- und auszuschalten. Die Erfindung betrifft außerdem eine entsprechende Schaltungsanordnung.

In elektronischen Geräten, in denen die Energieversorgungskapazität begrenzt ist, beispielsweise in akkubetriebenen Mobilfunkgeräten, werden integrierte Schaltungen, die zeitweise nicht benutzt sind, abgeschaltet, um Energie zu sparen. Dies wird insbesondere bei zeitschlitzgesteuertem Betrieb, beispielsweise nach dem TDMA-Verfahren (Time Division Multiple Access) angewandt, bei dem Sende- oder Empfangsbetrieb nur in aufeinanderfolgenden, beabstandeten Zeitschlitzen erfolgt. Hierzu steuert ein Microcontroller die Betriebszustände (d.h. eingeschaltet oder ausgeschaltet) weiterer im Gerät enthaltener integrierter Schaltungen.

In der EP-A-0 544 368 ist eine integrierte Schaltung beschrieben, bei der ein Power-Down-Zustand über verschiedene Signale einstellbar ist. Hierzu wird in einer Power-Down-Steuerschaltung eine Kombination verschiedener Zustände programmiert. Es erfolgt ein Vergleich eines zugeführten Eingangssignals mit der Programmierung, und davon abhängig wird eine weitere Schaltung gegebenenfalls deaktiviert. Die Power-Down-Steuerschaltung wertet eine spezifische Kombination von logischen Highs, logischen Lows und "don't care's" aus.

Die Aufgabe der Erfindung besteht darin, ein Verfahren und eine Schaltungsanordnung der eingangs genannten Art anzugeben, die möglichst geringen schaltungstechnischen Aufwand erfordern und eine schnelle Übertragung der Information zur Betriebszustandssteuerung ermöglichen.

Erfindungsgemäß wird diese Aufgabe durch ein Verfahren gemäß den Merkmalen des Patentanspruchs 1 gelöst. Eine Schaltungsanordnung ist in Patentanspruch 3 angegeben.

Zur Realisierung der Erfindung sind nur die ohnehin zur übrigen Datenübertragung erforderlichen Signalleitungen für Takt, Daten und Freigabe erforderlich. Zur Umschaltung in den eingeschalteten Zustand bzw. zur Rückschaltung in den ausgeschalteten Zustand ist jeweils nur die Überwachung der Signalpegel zu einem Zeitpunkt erforderlich, so daß die Übertragung der Steuerinformation nur eine geringe Zeitdauer beansprucht. Das Umschalten zwischen den Betriebszuständen erfolgt dementsprechend schnell.

Andere Lösungen sehen hier eine zusätzlich Leitung vor, die einerseits ein zusätzliches Eingangspin am Gehäuse der integrierten Schaltung erfordern würde und andererseits bei Hochfrequenzanwendungen in Mobilfunkgeräten zusätzlichen Tiefpaßfilteraufwand.

Zur schaltungstechnischen Realisierung in der integrierten Schaltung der gesteuerten Einrichtung ist im wesentlichen ein ODER-Schaltglied erforderlich, das mit dem 3-Leiter-Bus verbunden ist. Bei Realisierung in Bipolarschaltungstechnik wird vorteilhafterweise durch das ODER-Schaltglied ein die integrierte Schaltung versorgender Referenzspannungsgenerator gesteuert.

Nachfolgend wird die Erfindung anhand der in der Zeichnung dargestellten Figuren näher erläutert. Es zeigen:
- Figur 1: ein Prinzipschaltbild zur Realisierung der Erfindung und
- Figur 2: ein Signaldiagramm des 3-Leiter-Busses.

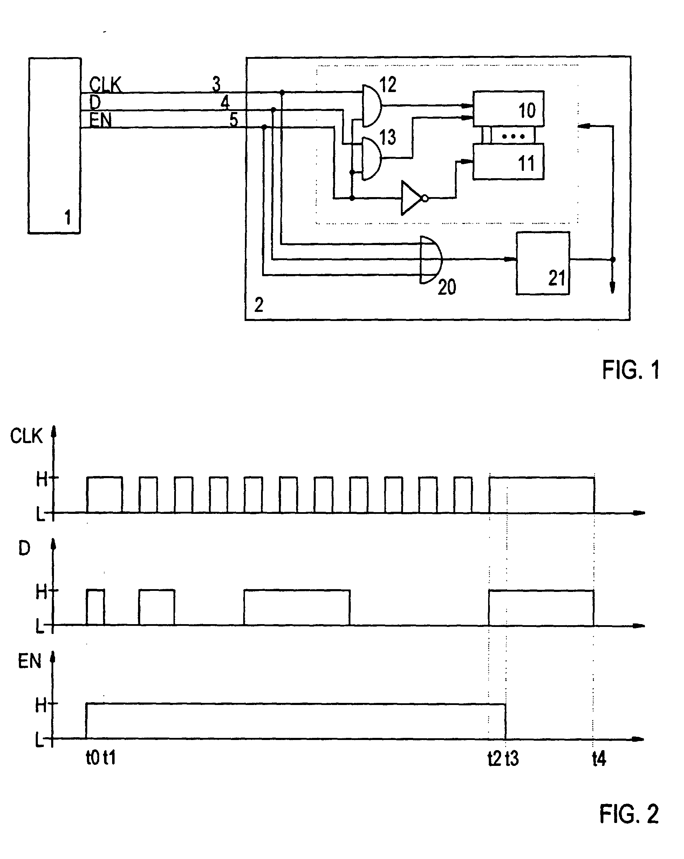

Gemäß Figur 1 sind eine erste Einrichtung, zum Beispiel ein Microcontroller 1, und eine zweite Einrichtung, zum Beispiel ein in bipolarer Schaltungstechnik ausgeführter Hochfrequenz-IC, beispielsweise eine bipolare PLL, über einen Bus mit drei Leitungen 3, 4, 5 verbunden. Der Microcontroller 1 steuert über den 3-Leiter-Bus die Datenübertragung zur Schaltung 2 sowie zu weiteren Schaltungen und sorgt für die Steuerung der Betriebszustände der Schaltung 2. Diese kann entweder einen eingeschalteten Betriebszustand oder einen ausgeschalteten Betriebszustand (Stand-By) einnehmen. Der 3-Leiter-Bus umfaßt eine erste Leitung 3 zur Übertragung eines Taktsignals CLK, eine zweite Leitung 4 zur Übertragung eines Datensignals D sowie eine dritte Leitung 5 zur Übertragung eines Freigabesignals EN. Letzteres Signal dient dazu, der Einrichtung 2 anzuzeigen, daß die an den Leitungen 3, 4 anliegenden Signale für Takt und Daten gültig sind. Die Takt- und Datensignale der Leitungen 3, 4 können während dieser Zeit in der Einrichtung 2 empfangen werden. Zum Datenempfang enthält die Einrichtung 2 ein Schieberegister 10, in das die Daten des Datensignals D der Leitung 4 seriell eingelesen werden. Ein Latch-Speicher 11 übernimmt die Daten des Schieberegisters 10 in bitparalleler Form. Die Signale CLK und D werden dem Schieberegister 10 zugeführt, wobei sie mittels des Signals EN über UND-Gatter 12, 13 freigeschaltet werden. Wenn das Signal EN deaktiviert wird, ist die Datenübertragung abgeschlossen und der Inhalt des Schieberegisters 10 wird ins Latch 11 übernommen.

Ein ODER-Schaltglied 20 ist eingangsseitig mit den Leitungen 3, 4, 5 verbunden. Durch den Ausgang des ODER-Gatters 20 wird eine Arbeitspunkteinstellungseinrichtung 21 gesteuert, die dafür sorgt, daß die Empfangseinrichtungen 10, ..., 13 sowie weitere Funktionseinheiten der integrierten Schaltung 2 mit Referenzspannungen versorgt und dadurch eingeschaltet werden. Die Schaltkreise der integrierten Schaltung 2 sind dabei in bipolarer Schaltungstechnik ausgeführt. Sie enthalten beispielsweise bipolare Differenzverstärkerschaltstufen, deren Arbeitspunkte mittels Referenzspannungen einstellbar sind. Bekanntlich umfaßt ein bipolarer Differenzverstärker zwei emittergekoppelte Transistoren, die über eine Stromquelle mit Bezugspotential verbunden sind. Die Referenzspannung steuert die Stromquelle. Darüber hinaus können Referenzspannungen vorliegen, die einen der emittergekoppelten Transistoren des Differenzverstärkers ansteuern. Zum Einschalten der integrierten Schaltung 2 werden in der Einrichtung 21 die Referenzspannungen erzeugt, zum Ausschalten der integrierten Schaltung 2 werden diese abgeschaltet.

Anhand des in der Figur 2 dargestellten Signaldiagramms für die Signale CLK, D, EN wird ein Beispiel für eine Datenübertragung zwischen den Einrichtungen 1, 2 einschließlich Umschaltungen zwischen den Betriebszuständen der Einrichtung 2 erläutert. Vor dem Zeitpunkt t0 führen alle drei Signalleitungen einen L-Pegel. Ein L-Pegel liegt bei einem niedrigen Potential, ein H-Pegel im Vergleich dazu bei höherem, positiverem Potential. Das ODER-Gatter 20 ist gesperrt, so daß die Einrichtung 21 keine Referenzspannungen zur Verfügung stellt und dadurch die bipolare integrierte Schaltung 2 abgeschaltet ist. Zum Zeitpunkt t0 schalten die drei Signale CLK, D, EN auf einen H-Pegel. Das ODER-Gatter 20 wird aktiviert, so daß von der Einrichtung 21 die Referenzspannungen bereitgestellt werden und die integrierte Schaltung 2 eingeschaltet wird. Die Zeitdauer bis zum Zeitpunkt t1 ist erforderlich, um die Referenzspannungen in der Einrichtung 1 hochzufahren. Anschließend erfolgt eine Datenübertragung, bei der das Taktsignal CLK den Datentakt überträgt, das Datensignal D digitale Daten in Form von L- und H-Impulsen überträgt und das Freigabesignal EN einen H-Pegel aufweist. Zum Zeitpunkt t3 ist die Datenübertragung abgeschlossen. Das Freigabesignal EN schaltet auf einen L-Pegel. Durch Schaltungsmaßnahmen innerhalb des Microcontrollers 1 wird gewährleistet, daß zum Zeitpunkt t2 unmittelbar vorher mindestens eines der Signale CLK oder D (im dargestellten Beispiel beide Signale) einen H-Pegel aufweist. Das ODER-Gatter 20 ist dann auch nach Abschluß der Datenübertragung aktiv und die integrierte Schaltung 2 bleibt eingeschaltet. Zwischen den Zeitpunkten t3 und t4 erfolgt die Verarbeitung der übertragenen Daten. Zum Zeitpunkt t4 werden auch die Signale CLK und D auf einen L-Pegel geschaltet, so daß das ODER-Gatter sperrt und die integrierte Schaltung 2 wieder in den abgeschalteten Betriebszustand (Stand-By) übergeht.

Die zwischen den Zeitpunkten t0 und t4 dargestellte Signalverarbeitung erfolgt beispielsweise während eines aktiven Zeitschlitzes innerhalb eines Mobilfunksystems, das nach dem TDMA-Verfahren arbeitet. Nur während eines solchen Zeitschlitzes ist die gesteuerte integrierte Schaltung 2 eingeschaltet. Nur während dieser Zeit wird Verlustleistung verbraucht. Das Ein- und Ausschalten erfolgt relativ schnell, indem der Schaltzustand des ODER-Gatters 20 ausgewertet wird. Die Zuordnung der Signalpegel zu den Betriebszuständen (ausgeschaltet: Signale CLK, D, EN sind L; eingeschaltet: mindestens eines der Signale CLK, D, EN ist H; Datenübertragung: Signal EN ist H, Signale CLK, D beliebig; Ende der Datenübertragung: Signal EN ist L, mindestens eines der Signale CLK, D ist H) ist derart gewählt, daß während des ausgeschalteten Zustands sämtliche Funktionseinheiten der Einrichtung 2 abgeschaltet und stromlos sind. Um im ausgeschalteten Zustand die Einschaltbedingung zu erkennen, ist nicht erforderlich, daß die Schaltkreise der integrierten Schaltung 2 vorher einen bestimmten Schaltzustand eingenommen haben. Dies ist insbesondere bei bipolaren Schaltungen vorteilhaft, da deren Schaltglieder, zum Beispiel Differenzverstärkerschaltstufen, unabhängig vom Schaltzustand (H oder L) bei eingeschaltetem Betriebszustand stets einen Strom führen.

## Patentansprüche

1. Verfahren zur Steuerung von Betriebszuständen einer zweiten Einrichtung (2) durch eine erste Einrichtung (1),
- bei dem die Einrichtungen (1, 2) über mindestens drei Signalleitungen (3, 4, 5) miteinander verbunden sind, von denen die erste Leitung (3) ausgebildet ist, ein Taktsignal (CLK) zu führen, die zweite Leitung (4) ausgebildet ist, ein digitale Daten repräsentierendes Datensignal (D) zu führen, und die dritte Leitung (5) ausgebildet ist, ein Freigabesignal (EN), durch das die Übertragung von Datensignal und Taktsignal (D, CLK) als gültig angezeigt wird, zu führen, **dadurch gekennzeichnet, dass**
- ein erster Betriebszustand, in dem die zweite Einrichtung (2) ausgeschaltet ist, eingestellt wird, wenn von der ersten Einrichtung (1) die Signale der Leitungen (3, 4, 5) auf einen ersten Pegel (L) gebracht werden,
- ein zweiter Betriebszustand, in dem die zweite Einrichtung (2) eingeschaltet ist, eingestellt wird, wenn von der ersten Einrichtung (1) die Signale der ersten, zweiten und dritten Leitung (3, 4, 5) auf einen zweiten Pegel (H) gebracht werden,
- wobei der zweite Pegel (H) ein im Vergleich zum ersten Pegel (L) positiveres Potential aufweist, daß
- während des zweiten Betriebszustands Daten übertragen werden, indem auf der dritten Leitung (5) der zweite Pegel (H) übertragen wird und dadurch die Übertragung von Datensignal und Taktsignal (D, CLK) als gültig angezeigt wird und auf der ersten Leitung (3) das abwechselnde erste und zweite Pegel (L, H) aufweisende Taktsignal (CLK) übertragen wird und auf der zweiten Leitung (4) das die Daten repräsentierende Datensignal (D) übertragen wird,
- und während des zweiten Betriebszustands außerhalb der Zeitdauer der Übertragung von Daten das Freigabesignal (EN) den ersten Pegel (L) aufweist und mindestens eines der Daten- und Taktsignale (D, CLK) den zweiten Pegel (H) aufweist.

2. Verfahren nach Anspruch 1,
**dadurch gekennzeichnet, daß**
in der zweiten Einrichtung (2) ein Steuersignal zum Einschalten erzeugt wird, indem eine ODER-Verknüpfung (20) der Signale (CLK, D, EN) der drei Leitungen (3, 4, 5) gebildet wird.

3. Schaltungsanordnung zur Steuerung von Betriebszuständen einer zweiten Einrichtung durch eine erste Einrichtung mit einer ersten Einrichtung (1) und einer zweiten Einrichtung (2) und mit mindestens drei Signalleitungen (3, 4, 5), von denen die erste Leitung (3) für die Übertragung eines Taktsignals (CLK) vorgesehen ist, die zweite Leitung (4) für die Übertragung eines digitale Daten repräsentierenden Datensignals (D) und die dritte Leitung (5) für die Übertragung eines Freigabesignals (EN), durch das die Übertragung von Datensignal und Taktsignal (D, CLK) als gültig angezeigt wird, und mit Mitteln (20, 21),
- durch die ein erster Betriebszustand, in welchem die zweite Einrichtung (2) ausgeschaltet ist, einstellbar ist, wenn die Signale der Leitungen (3, 4, 5) auf einen ersten Pegel (L) liegen,
- durch die ein zweiter Betriebszustand, in dem die zweite Einrichtung (2) eingeschaltet ist, einstellbar ist, wenn die Signale der ersten, zweiten und dritten Leitung (3, 4, 5) einen zweiten Pegel (H) aufweisen,
- wobei der zweite Pegel (H) ein im Vergleich zum ersten Pegel (L) positiveres Potential aufweist,
- durch die während des zweiten Betriebszustands Daten übertragbar sind, indem auf der dritten Leitung (5) der zweite Pegel (H) übertragbar ist und Datensignal und Taktsignal (D, CLK) als gültig angezeigt werden, auf der ersten Leitung (3) das abwechselnd erste und zweite Pegel (L, H) aufweisende Taktsignal (CLK) übertragbar ist und auf der zweiten Leitung (4) das die Daten repräsentierende Datensignal (D) übertragbar ist,
- und durch die während des zweiten Betriebszustands außerhalb der Zeit, in der Daten übertragen werden, das Freigabesignal (EN) mit einem ersten Pegel (L) erzeugbar ist und mindestens eines der Daten- und Taktsignale mit dem zweiten Pegel (H) erzeugbar ist.

4. Schaltungsanordnung nach Anspruch 3,
**dadurch gekennzeichnet, daß**
die Mittel (20, 21) ein ODER-Schaltglied (20) umfassen, das eingangsseitig mit den Leitungen (3, 4, 5) verbunden ist und durch das ausgangsseitig ein Steuersignal erzeugbar ist, durch das ein Mittel (10, ..., 13) zum Empfang der Daten und weitere Funktionseinheiten der zweiten Einrichtung (2) ein- und ausschaltbar sind.

5. Schaltungsanordnung nach einem der Ansprüche 3 oder 4,
**dadurch gekennzeichnet, daß**
die zweite Einrichtung (2) in bipolarer Schaltungstechnik ausgeführt ist mit Differenzverstärkerschaltstufen, deren Arbeitspunkte mittels Referenzspannungen einstellbar sind, und daß Mittel (21) vorgesehen sind, durch die während des zweiten Betriebszustands die Referenzspannungen eingeschaltet werden und während des ersten Betriebszustands abgeschaltet werden.

## Claims

1. Method for controlling operating states of a second device (2) by means of a first device (1),
- in which the devices (1, 2) are connected to one another by way of at least three signal lines (3, 4, 5), the first line (3) of which is designed to carry a clock signal (CLK), the second line (4) of which is designed to carry a data signal (D) representing digital data, and the third line (5) of which is designed to carry an enable signal (EN), which indicates that the transmission of the data signal and clock signal (D, CLK) is valid, **characterized in that**
- a first operating state, in which the second device (2) is switched off, is set when the signals on the lines (3, 4, 5) are brought to a first level (L) by the first device (1),
- a second operating state, in which the second device (2) is switched on, is set when the signals on the first, second and third lines (3, 4, 5) are brought to a second level (H) by the first device (1),
- the second level (H) having a more positive potential in comparison with the first level (L), **in that**
- data are transmitted during the second operating state by the second level (H) being transmitted on the third line (5) and the transmission of the data signal and clock signal (D, CLK) thereby being indicated as being valid and by the clock signal (CLK) which has alternating first and second levels (L, H), being transmitted on the first line (3) and by the data signal (D) representing the data being transmitted on the second line (4),
- and the enable signal (EN) has the first level (L) and at least one of the data and clock signals (D, CKL) has the second level (H) during the second operating state outside the period of time for transmitting data.

2. Method according to Claim 1,
**characterized in that**
a control signal for switching-on purposes is generated in the second device (2) by ORing (20) the signals (CLK, D, EN) on the three lines (3, 4, 5).

3. Circuit arrangement for controlling operating states of a second device by means of a first device, having a first device (1) and a second device (2) and having at least three signal lines (3, 4, 5), the first line (3) of which is intended for transmitting a clock signal (CLK), the second line (4) of which is intended for transmitting a data signal (D) representing digital data, and the third line (5) of which is intended for transmitting an enable signal (EN), which indicates that the transmission of the data signal and clock signal (D, CLK) is valid, and having means (20, 21),
- which can be used to set a first operating state, in which the second device (2) is switched off, when the signals on the lines (3, 4, 5) are at a first level (L),
- which can be used to set a second operating state, in which the second device (2) is switched on, when the signals on the first, second and third lines (3, 4, 5) have a second level (H),
- the second level (H) having a more positive potential in comparison with the first level (L),
- which can be used to transmit data during the second operating state by it being possible to transmit the second level (H) on the third line (5) and by indicating that the data signal and clock signal (D, CLK) are valid, by it being possible to transmit the clock signal (CLK), which alternately has first and second levels (L, H), on the first line (3) and by it being possible to transmit the data signal (D) representing the data on the second line (4),
- and which can be used, during the second operating state outside the time in which data are transmitted, to generate the enable signal (EN) having a first level (L) and at least one of the data and clock signals having the second level (H).

4. Circuit arrangement according to Claim 3,
**characterized in that**
the means (20, 21) comprise an OR switching element (20), which is connected to the lines (3, 4, 5) on the input side and can be used to generate a control signal on the output side, it being possible for said control signal to be used to switch a means (10, ..., 13) for receiving the data and further functional units of the second device (2) on and off.

5. Circuit arrangement according to either of Claims 3 and 4,
**characterized in that**
the second device (2) is designed using bipolar circuitry and has differential amplifier switching stages, the operating points of which can be set by means of reference voltages, and **in that** provision is made of means (21), which can be used to switch on the reference voltages during the second operating state and switch them off during the first operating state.

## Revendications

1. Procédé pour commander des états de fonctionnement d'une deuxième installation (2) par une première installation (1),
- selon lequel les installations (1, 2) sont reliées l'une à l'autre par au moins trois circuits d'acheminement des signaux (3, 4, 5) dont le premier circuit d'acheminement (3) est conçu pour conduire un signal de synchronisation (CLK), le deuxième circuit d'acheminement (4) est conçu pour conduire un signal de données (D) qui représente des données numériques et le troisième circuit d'acheminement (5) est conçu pour conduire un signal de validation (EN) au moyen duquel la transmission du signal de données et du signal de synchronisation (D, CLK) est indiquée comme valable,
**caractérisé en ce que**
- un premier état de fonctionnement dans lequel la deuxième installation (2) est déconnectée, est établi lorsque les signaux des circuits d'acheminement (3, 4, 5) sont portés à un premier niveau (L) par la première installation (1),
- un deuxième état de fonctionnement dans lequel la deuxième installation (2) est connectée, est établi lorsque les signaux du premier, du deuxième et du troisième circuit d'acheminement (3, 4, 5) sont portés à un deuxième niveau (H) par la première installation (1),
- le deuxième niveau (H) présentant un potentiel plus positif que le premier niveau (L),
- pendant le deuxième état de fonctionnement des données sont transmises du fait que le deuxième niveau (H) est transmis au troisième circuit d'acheminement (5) et que par conséquent la transmission du signal de données et du signal de synchronisation (P, CLK) est indiquée comme valable et que sur le premier circuit d'acheminement (3) est transmis le signal de synchronisation (CLK) qui présente alternativement le premier et le deuxième niveau (L, H) et sur le deuxième circuit d'acheminement (4) est transmis le signal de données (D) qui représente les données,
- et pendant le deuxième état de fonctionnement, en-dehors de la durée de la transmission des données, le signal de validation (EN) présente le premier niveau (L) et au moins l'un des signaux de données et de synchronisation (D, CLK) présente le deuxième niveau (H).

2. Procédé selon la revendication 1, **caractérisé en ce qu'**un signal de commande destiné à la connexion est produit dans la deuxième installation (2) du fait qu'est formée une combinaison OU (20) des signaux (CLK, D, EN) des trois circuits d'acheminement (3, 4, 5).

3. Montage pour commander des états de fonctionnement d'une deuxième installation par une première installation comportant une première installation (1) et une deuxième installation (2) et comportant au moins trois circuits d'acheminement des signaux (3, 4, 5) dont le premier circuit d'acheminement (3) est prévu pour transmettre un signal de synchronisation (CLK), le deuxième circuit d'acheminement (4) pour transmettre un signal de données (D) qui représente des données numériques et le troisième circuit d'acheminement (5) pour transmettre un signal de validation (EN) par lequel la transmission du signal de données et du signal de synchronisation (D, CLK) est indiquée comme valable et comportant des moyens (20, 21)
- par lesquels peut être établi un premier état de fonctionnement, dans lequel la deuxième installation (2) est déconnectée lorsque les signaux des circuits d'acheminement (3, 4, 5) se trouvent à un premier niveau (L),
- par lesquels peut être établi un deuxième état de fonctionnement, dans lequel la deuxième installation (2) est connectée lorsque les signaux du premier, du deuxième et du troisième circuit d'acheminement (3, 4, 5) se trouvent à un deuxième niveau (H),
- le deuxième niveau (H) présentant un potentiel plus positif que le premier niveau (L),
- par lesquels, pendant le deuxième état de fonctionnement, des données peuvent être transmises du fait que le deuxième niveau (H) peut être transmis sur le troisième circuit d'acheminement (5) et que le signal de données et le signal de synchronisation (D, CLK) sont indiqués comme valables, que le signal de synchronisation (CLK) qui présente alternativement le premier et le deuxième niveau (L, H) peut être transmis sur le premier circuit d'acheminement (3) et le signal de données (D) qui représente les données peut être transmis sur le deuxième circuit d'acheminement (4),
- et par lesquels, pendant le deuxième état de fonctionnement, en-dehors de la durée où les données sont transmises, le signal de validation (EN) peut être produit selon un premier niveau (L) et au moins l'un des signaux de synchronisation peut être produit selon le deuxième niveau (H).

4. Montage de circuit selon la revendication 3, **caractérisé en ce que** les moyens (20, 21) comprennent un élément logique OU (20) qui est reliée côté entrée aux circuits d'acheminement (3, 4, 5) et qui peut produire du côté sortie un signal de commande par lequel des moyens (10, ..., 13) pour recevoir les données et d'autres unités fonctionnelles de la deuxième installation (2) peuvent être connectés et déconnectés.

5. Montage de circuit selon l'une des revendications 3 ou 4, **caractérisé en ce que** la deuxième installation (2) est réalisée selon une technique de circuit bipolaire comportant des étages de commutation d'amplification différentielle dont les points de fonctionnement dynamique peuvent être réglés à l'aide de tensions de référence et que l'on prévoit des moyens (21) grâce auxquels les tensions de référence sont établies pendant le deuxième état de fonctionnement et supprimées pendant le premier état de fonctionnement.
